# EUROPEAN PATENT APPLICATION

(11) **EP 4 538 821 A1**
(43) Date of publication of application: **16.04.2025**
(21) Application number: 23862185.8
(22) Date of filing: 22.08.2023
(51) Int. Cl.: G05D 1/00, B60W 60/00

(54) **MULTI-SENSOR SYNCHRONOUS CONTROL METHOD AND DEVICE, UNMANNED SYSTEM, AND MEDIUM**

(30) Priority: 07.09.2022 CN 202211099893
(71) Applicant: Anhui NIO Autonomous Driving Technology Co., Ltd., Hefei, Anhui 230601 (CN)
(72) Inventor: LI, Binqi, Shanghai 201804 (CN); YAO, Yuhan, Shanghai 201804 (CN); YANG, Jian, Shanghai 201804 (CN)
(74) Representative: Vossius & Partner Patentanwälte Rechtsanwälte mbB
(86) International application number: PCT/CN2023/114242
(87) International publication number: WO 2024/051489

(57) **Abstract**

The invention provides a multi-sensor synchronization control method and device, an autonomous driving system, and a medium. The method includes: determining delay duration of sensors to be synchronized based on coordinates of a preset reference point corresponding to the sensors to be synchronized and control characteristics of the sensors to be synchronized; determining a triggering moment of the sensors to be synchronized based on a preset target sampling moment and the delay duration; and triggering, by using the triggering moment, a synchronous clock signal corresponding to the sensors to be synchronized, so that the sensors to be synchronized sample data on the preset reference point at the target sampling moment. In this way, a different triggering moment can be set for each sensor, and all the sensors can perform sampling on corresponding reference points at the preset target sampling moment, thereby implementing synchronous sampling on the same object by all the sensors, improving the accuracy of a perception result of a perception system, and thus improving the stability and safety of the autonomous driving system.

## Description

The invention claims priority to Chinese Patent Application No. 202211099893.0, filed on September 7, 2022, and entitled "MULTI-SENSOR SYNCHRONIZATION CONTROL METHOD AND DEVICE, AUTONOMOUS DRIVING SYSTEM, AND MEDIUM", which is incorporated herein by reference in its entirety.

### Technical Field

The invention relates to the technical field of autonomous driving systems, and specifically provides a multi-sensor synchronization control method and device, an autonomous driving system, and a medium.

### Background Art

The functions of an advanced driving assistance system (ADAS) are of increasing concern, and the experience of the functions has also been further improved with the advancement of sensors and information technologies.

In the existing ADAS, due to different scanning ways of sensors, a time at which the sensors sample data is not synchronized, resulting in inconsistent positions for the same object in different sensors. In this case, a perception system performs object recognition based on data results of the sensors, and then performs fusion checking, to obtain a final perception result of low accuracy, thereby reducing stability and safety of an autonomous driving system.

### Summary

In order to overcome the above disadvantages, the invention is proposed to provide a multi-sensor synchronization control method and device, an autonomous driving system, and a medium that solve or at least partially solve the technical problem that a perception system performs object recognition based on data results of sensors, and then performs fusion checking, to obtain a final perception result of low accuracy, thereby reducing stability and safety of an autonomous driving system.

In a first aspect, the invention provides a multi-sensor synchronization control method, including:
determining delay duration of sensors to be synchronized based on coordinates of a preset reference point corresponding to the sensors to be synchronized and control characteristics of the sensors to be synchronized, where the delay duration is duration between a triggering moment of the sensors to be synchronized and a preset target sampling moment of the sensors to be synchronized;
determining the triggering moment of the sensors to be synchronized based on the preset target sampling moment and the delay duration;
triggering, by using the triggering moment, a synchronous clock signal corresponding to the sensors to be synchronized and obtained based on a pre-provided clock signal source, so that the sensors to be synchronized sample data on the preset reference point at the target sampling moment.

Further, in the above multi-sensor synchronization control method, the synchronous clock signal is obtained in the following way:
performing, based on the pre-provided clock signal source, frequency division on the clock signal source by using a frequency divider having the same sampling frequency as the sensors to be synchronized to obtain the synchronous clock signal; or
correcting a local clock of the sensors to be synchronized based on the pre-provided clock signal source according to a fixed frequency to obtain the synchronous clock signal.

The determining delay duration of the sensors to be synchronized based on coordinates of a preset reference point corresponding to the sensors to be synchronized and control characteristics of the sensors to be synchronized includes:
determining first delay duration of the sensors to be synchronized based on the coordinates of the preset reference point;
determining second delay duration of the sensors to be synchronized based on the control characteristics of the sensors to be synchronized; and
taking a sum of the first delay duration and the second delay duration as the delay duration.

Further, in the above multi-sensor synchronization control method, the determining delay duration of the sensors to be synchronized based on coordinates of a preset reference point corresponding to the sensors to be synchronized and control characteristics of the sensors to be synchronized includes:
determining first delay duration of the sensors to be synchronized based on the coordinates of the preset reference point;
determining second delay duration of the sensors to be synchronized based on the control characteristics of the sensors to be synchronized; and
taking a sum of the first delay duration and the second delay duration as the delay duration.

Further, in the above multi-sensor synchronization control method, the determining first delay duration of the sensors to be synchronized based on the coordinates of the preset reference point includes:
determining the first delay duration corresponding to the coordinates of the preset reference point based on a preset association relationship between coordinates and delay duration; and
the determining second delay duration of the sensors to be synchronized based on the control characteristics of the sensors to be synchronized includes:
   determining the second delay duration based on response duration and/or a sampling frequency of the sensors to be synchronized.

Further, in the above multi-sensor synchronization control method, before the determining delay duration of the sensors to be synchronized based on coordinates of a preset reference point corresponding to the sensors to be synchronized and control characteristics of the sensors to be synchronized, the method further includes:
in a coordinate system of an autonomous driving system provided with the sensors to be synchronized, selecting a common point of sampling ranges of a plurality of sensors in at least one specified direction as a preset reference point in each specified direction,
where the sampling range of the sensor is determined based on an installation angle and position of the sensor.

Further, in the above multi-sensor synchronization control method, before the determining delay duration of sensors to be synchronized based on coordinates of a preset reference point corresponding to the sensors to be synchronized and control characteristics of the sensors to be synchronized, the method further includes:
in a coordinate system of the sensors to be synchronized, selecting a point at a specified position as the preset reference point.

Further, the above multi-sensor synchronization control method further includes:
if the preset reference point is the selected point at the specified position in the coordinate system of the sensors to be synchronized, correcting, based on extrinsic parameters of the sensors to be synchronized, the data sampled by the sensors to be synchronized.

Further, in the above multi-sensor synchronization control method, a process of obtaining the clock signal source includes:
generating a periodic waveform with a fixed frequency by using a high-precision temperature drift compensated crystal oscillator; and
using the periodic waveform as the clock signal source.

In a second aspect, the invention provides a multi-sensor synchronization control device, including at least one processor and a storage apparatus configured to store a plurality of program codes, where the program codes are adapted to be loaded and executed by the at least one processor to perform the multi-sensor synchronization control method in any one of the above aspects.

In a third aspect, an autonomous driving system is provided, including the above multi-sensor synchronization control device.

In a fourth aspect, a computer-readable storage medium is provided. The computer-readable storage medium stores a plurality of program codes, where the program codes are adapted to be loaded and executed by at least one processor to perform the multi-sensor synchronization control method according to any one of the above technical solutions.

The one or more technical solutions of the invention described above have at least one or more of the following beneficial effects:
In a technical solution for implementing the invention, the delay duration of the sensors to be synchronized is determined based on the coordinates of the preset reference point corresponding to the sensors to be synchronized and the control characteristics of the sensors to be synchronized; the triggering moment of the sensors to be synchronized is determined based on the preset target sampling moment and the delay duration; and the synchronous clock signal corresponding to the sensors to be synchronized is triggered by using the triggering moment, so that the sensors to be synchronized sample data on the preset reference point at the preset target sampling moment. In this way, a different triggering moment can be set for each sensor, and all the sensors can perform sampling on corresponding reference points at the preset target sampling moment, thereby implementing synchronous sampling on the same object by all the sensors, improving the accuracy of a perception result of a perception system, and thus improving the stability and safety of the autonomous driving system.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In addition, similar numbers in the figures are used to represent similar components, in which:
FIG. 1 is a schematic flowchart of main steps of a smart home device control method according to an embodiment of the invention;
FIG. 2 is a block diagram of a main structure of a multi-sensor synchronization control system according to an embodiment of the invention;
FIG. 3 is a specific time sequence control diagram for performing sampling by two different cameras;
FIG. 4 is a time sequence control diagram for a millimeter wave radar;
FIG. 5 is a time sequence diagram of multi-sensor synchronization control according to the invention; and
FIG. 6 is a block diagram of a main structure of a multi-sensor synchronization control device according to an embodiment of the invention.

### Detailed Description of Embodiments

Some implementations of the invention are described below with reference to the accompanying drawings. Those skilled in the art should understand that these implementations are merely used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

In an existing ADAS, due to different scanning ways of sensors, a time at which the sensors sample data is not synchronized, resulting in inconsistent positions for the same object in different sensors. In this case, a perception system performs object recognition based on data results of the sensors, and then performs fusion checking, to obtain a final perception result of low accuracy, thereby reducing stability and safety of an autonomous driving system.

Therefore, to solve the above technical problems, the invention provides the following technical solutions.

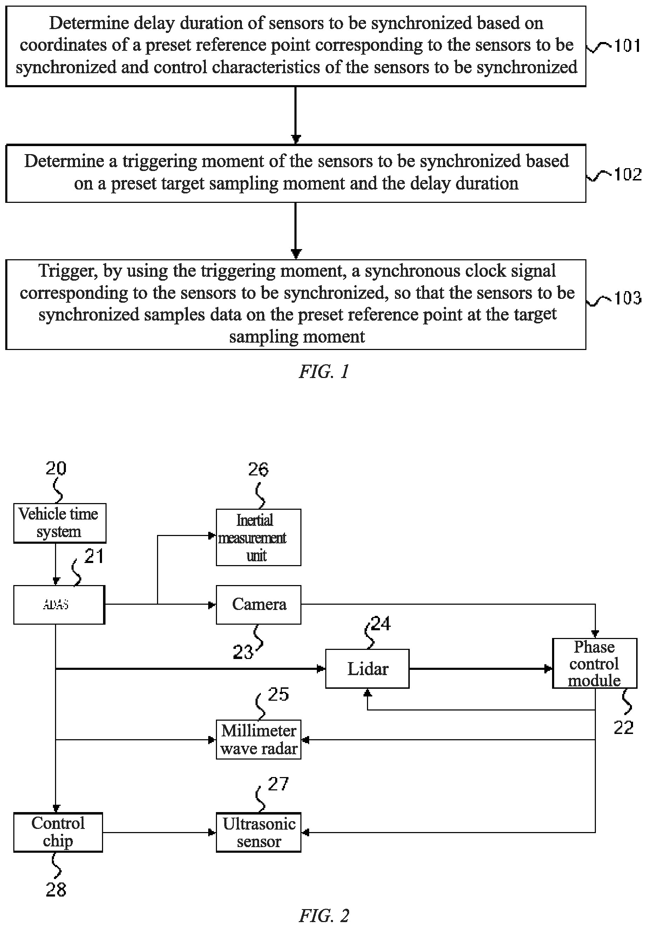

Referring to FIG. 1, FIG. 1 is a schematic flowchart of main steps of a smart home device control method according to an embodiment of the invention. As shown in FIG. 1, the multi-sensor synchronization control method in this embodiment of the invention mainly includes step 101 to step 103 below.

Step 101: Determine delay duration of sensors to be synchronized based on coordinates of a preset reference points corresponding to the sensors to be synchronized and control characteristics of the sensors to be synchronized.

In a specific implementation process, the delay duration of the sensors to be synchronized is duration between a triggering moment of the sensors to be synchronized and a preset target sampling moment of the sensors to be synchronized. In other words, after the ADAS sends a trigger signal, the sensors to be synchronized may perform sampling at the preset target sampling moment after the delay duration.

In a specific implementation process, there is a plurality of sensors in the ADAS, and a corresponding reference point may be set for each of the sensors according to actual needs, so that each of the sensors can sample data at the preset reference point.

In a specific implementation process, the setting ways of the preset reference point may include the following two setting ways:
First way: In a coordinate system of an autonomous driving system provided with the sensors to be synchronized, a common point of sampling ranges of a plurality of sensors in at least one specified direction is selected as a preset reference point in each specified direction, where the sampling range of the sensor may include a coverage range of the sensor and/or a line-of-sight range of the sensor. In other words, an intersection point that can be scanned by all the plurality of sensors can be selected for the specified direction as the preset reference point in the specified direction. This may include four specified directions located at the front, rear, left, and right of the vehicle for scanning a 360° area around the vehicle.

In a specific implementation process, the sampling range of the sensor may be determined based on an installation angle and position of the sensor. In this way, when the installation angle and position of the sensor change due to vibration of the vehicle or other factors, the sampling range of the sensors may change, so that the preset reference point can be updated, coordinates of the updated preset reference point can be obtained, and accurate delay duration of the sensors to be synchronized can be obtained, to reduce an error of synchronization precision.

Second way: In a coordinate system of the sensors to be synchronized, a point at a specified position is selected as the preset reference point. This way is not influenced by extrinsic parameters of the sensors, and an approximate reference point can be selected for the same type of sensors in order to save resources. However, in a final synchronization process, there may be a problem of inaccurate spatial alignment of synchronization points in the coordinate system of the autonomous driving system caused by different positions of the sensors, and the data of the sensors are corrected and processed based on extrinsic parameters in subsequent perception fusion.

In a specific implementation process, coordinates of a preset reference point corresponding to the sensors to be synchronized that need to be controlled may be obtained, and then first delay duration of the sensors to be synchronized may be determined by using the coordinates of the preset reference point.

Specifically, the coordinates of the preset reference point corresponding to the sensors to be synchronized are different, and the corresponding delay duration thereof is different. Therefore, an association relationship between the coordinates and the delay duration can be preset for the sensors to be synchronized based on a theoretically calculated value. In this way, after the coordinates of the preset reference point corresponding to the sensors to be synchronized are obtained, the association relationship between the coordinates and the delay duration can be used for looking up to obtain corresponding delay duration as the first delay duration of the sensors to be synchronized. If the preset reference point is set in the above first way, the coordinates of the preset reference point within a line-of-sight range in each direction may be obtained through transformation base on the preset reference point in the corresponding direction and the extrinsic parameters of the sensors.

In a specific implementation process, second delay duration of the sensors to be synchronized may further be determined based on the control characteristics of the sensors to be synchronized, and then a sum of the first delay duration and the second delay duration is used as the delay duration.

Specifically, different sensors have different control characteristics such as response duration and/or a sampling frequency, and a moment at which a control signal sent by an ADAS controller is received is also different. Therefore, the second delay duration may be determined based on response duration and/or a sampling frequency of the sensors to be synchronized, where the response duration is a time period corresponding to a control closed-loop of a sensor.

Step 102: Determine a triggering moment of the sensors to be synchronized based on the preset target sampling moment and the delay duration.

In a specific implementation process, a time for simultaneously sampling data may be set for all the sensors as the preset target sampling moment. In this way, after the delay duration of the sensors to be synchronized is obtained, the delay duration elapses since the preset target sampling moment to obtain a corresponding moment as the triggering moment of the sensors to be synchronized, namely, the moment at which the ADAS controller sends the control signal.

Step 103: Trigger, by using the triggering moment, a synchronous clock signal corresponding to the sensors to be synchronized, so that the sensors to be synchronized sample data on the preset reference point at the target sampling moment.

In a specific implementation process, the ADAS controller may trigger, based on the triggering moment of the sensors to be synchronized, the synchronous clock signal corresponding to the sensors to be synchronized, to send a control signal to the sensors to be synchronized, and then after the delay duration, the sensors to be synchronized receive the control signal at the preset target sampling moment, and then the sensors to be synchronized samples data on the preset reference point.

In a specific implementation process, the synchronous clock signal is obtained in the following way:
Frequency division may be performed on the clock signal source based on a pre-provided clock signal source by using a frequency divider having the same sampling frequency as the sensors to be synchronized to obtain the synchronous clock signal; or based on a pre-provided clock signal source, by using a generalized precision time protocol (gPTP) time synchronization mechanism in the Ethernet, a local clock of the sensors to be synchronized is corrected based on a fixed frequency to obtain the synchronous clock signal, to ensure that timelines of all sensors are uniform.

Specifically, a clock signal source may be provided by using a crystal oscillator, or other devices or circuits that can generate a clock signal source. A high-precision temperature drift compensated crystal oscillator is used as the crystal oscillator so that an amount of change in an oscillation frequency generated by changes in a surrounding temperature is reduced by an additional temperature compensation circuit within the crystal oscillator.

Specifically, a periodic waveform with a fixed frequency may be generated by using the high-precision temperature drift compensated crystal oscillator; and the periodic waveform is used as the clock signal source. The periodic waveform with a fixed frequency may include a square waveform, a triangle waveform, a sine waveform, etc., and this embodiment is not specifically limited.

According to the multi-sensor synchronization control method in this embodiment, the delay duration of the sensors to be synchronized is determined based on the coordinates of the preset reference point corresponding to the sensors to be synchronized and the control characteristics of the sensors to be synchronized; the triggering moment of the sensors to be synchronized is determined based on the preset target sampling moment and the delay duration; and the synchronous clock signal corresponding to the sensors to be synchronized is triggered by using the triggering moment, so that the sensors to be synchronized sample data on the preset reference point at the preset target sampling moment. In this way, a different triggering moment can be set for each sensor, and all the sensors can perform sampling on corresponding reference points at the preset target sampling moment, thereby implementing synchronous sampling on the same object by all the sensors, improving the accuracy of a perception result of a perception system, and thus improving the stability and safety of the autonomous driving system.

The technical solution of the invention is described in detail below with specific examples:
Referring to FIG. 2, FIG. 2 is a block diagram of a main structure of a multi-sensor synchronization control system according to an embodiment of the invention. As shown in FIG. 2, the multi-sensor synchronization control system of this embodiment may include a vehicle time system 20, an ADAS 21, a phase control module 22, a camera 23, a lidar 24, a millimeter wave radar 25, an inertial measurement unit 26, an ultrasonic sensor 27, a control chip 28, etc.

For the camera 23, a triggering moment of the camera 23 is the triggering moment and a delay value of the camera 23 that are used to configure a register of the sensors, and the camera 23 performs transmission with the ADAS 21 through a hardwired connection. The response duration of the camera 23 may be ignored, and first delay duration is inversely deduced based on coordinates of a reference point corresponding to the camera 23, to obtain the triggering moment of the camera 23.

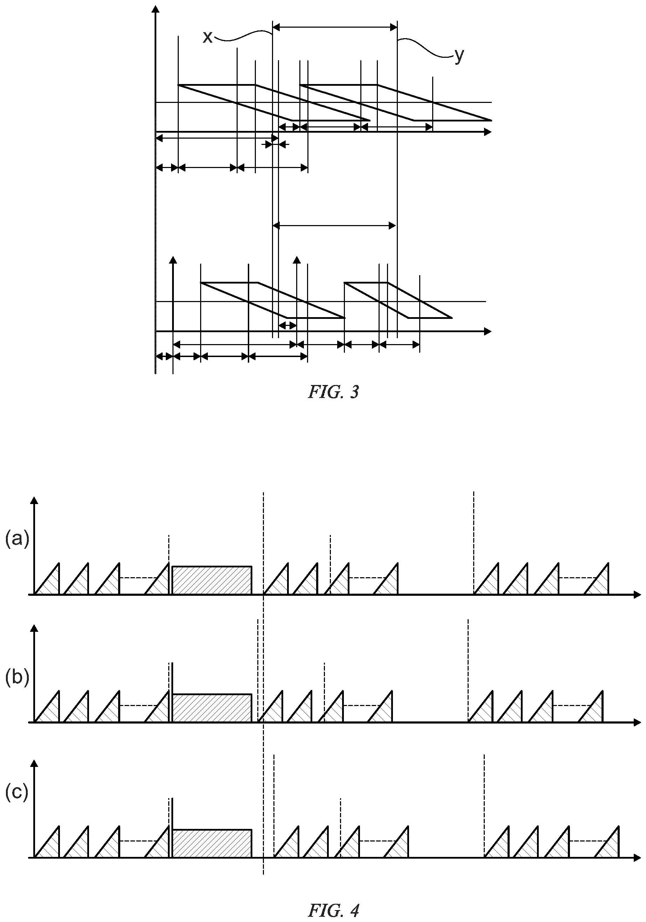

It should be noted that, when outputting an instruction, the phase control module 22 has performed checking and calculation based on information such as a link transmission delay and an exposure delay, and therefore, the camera 23 does not need to do additional calculation and compensation, and the instruction is directly configured and written into the register and synchronously takes effect. FIG. 3 is a specific time sequence control diagram for performing sampling by two different cameras. As shown in FIG. 3, an upper parallelogram and a lower parallelogram are scanning results corresponding to the two cameras, and centers of the two parallelograms are always aligned. This means that the upper and lower cameras 23 both collect the data of the preset reference point at the same moment. Reference is made to a line x and a line y.

For the lidar 24, the triggering moment of the lidar 24 is a scanning moment corresponding to the reference point. The lidar 24 performs transmission with the ADAS 21 through an Ethernet link. The solution relies on the scanning way of the lidar 24, and it is required to obtain an association relationship between the coordinates and delay duration based on the scanning way of the lidar 24, inversely deduce the first delay duration based on the coordinates of the reference point corresponding to the lidar 24, and obtain the second delay duration of the lidar 24 in conjunction with a control closed-loop characteristic (such as response duration and a control frequency) of a motor of the lidar, to obtain the triggering moment of the lidar 24.

For the millimeter wave radar 25, the triggering moment of the millimeter wave radar 25 is a midpoint moment of electromagnetic wave emission duration. The millimeter wave radar 25 performs transmission with the ADAS 21 through an Ethernet link, and obtaining a triggering moment of the millimeter wave radar 25 is similar to obtaining the triggering moment of the lidar 24. For details, reference may be made to the above relevant records. Details are not repeated herein. Synchronization may be implemented by controlling the midpoint moment by adjusting an electromagnetic wave sending moment and sending duration. FIG. 4 is a time sequence control diagram for a millimeter wave radar. As shown in FIG. 4, (a) is a time sequence without synchronization control, (b) is a time sequence for advanced triggering, and (c) is a time sequence for delayed triggering.

For the inertial measurement unit 26, a trigger period thereof reaches 200 Hz, which is an order of magnitude higher than frequencies of other sensors. Frequency correction is performed based on a PPS signal provided by a global clock without triggering an active synchronization function. Theoretically, a maximum deviation of data of the inertial measurement unit 26 from a sampling synchronization point of another sensor under the global clock is 5 ms, and a data result may be compensated on an algorithmic side based on timestamps of the inertial measurement unit 26 to implement fusion between the sensors. The inertial measurement unit 26 also performs transmission with the ADAS 21 through a hardwired connection, response duration of the inertial measurement unit 26 may be ignored, and the first delay duration is inversely deduced based on coordinates of a reference point corresponding to the inertial measurement unit 26, to obtain a triggering moment of the inertial measurement unit 26.

It should be noted that the response duration of the inertial measurement unit 26 may alternatively not be ignored and be used as the second delay duration, and then the first delay duration is inversely deduced based on the coordinates of the reference point corresponding to the inertial measurement unit 26, to obtain the triggering moment of the inertial measurement unit 26.

For the ultrasonic sensor 27, a timeline of the ADAS 21 is synchronized with that of the control chip 28 based on the gPTP, triggering time information is received through the Ethernet to trigger a driver layer, or a transmitting command is controlled by the control chip 28 to trigger the driver layer.

It should be noted that the lidar 24, the millimeter wave radar 25, and the ultrasonic sensor 27 are greatly affected by respective control characteristics because they transmit data with the ADAS 21 through the Ethernet. Therefore, the phase control module 22 may further correct a triggering moment of each sensor in a next cycle based on a sampling moment of each sensor in a previous cycle, to further ensure sampling precision to be synchronized with that of another sensor.

It should be noted that, although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

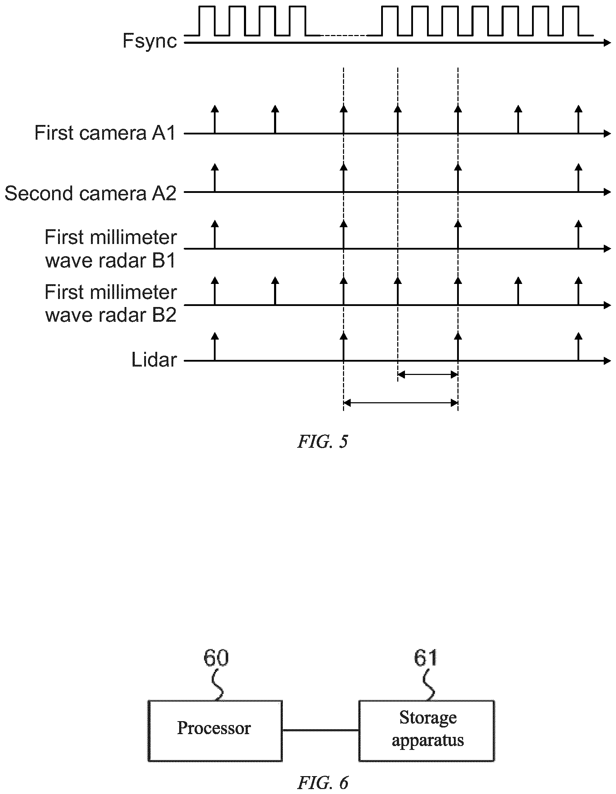

FIG. 5 is a time sequence diagram of multi-sensor synchronization control according to the invention. As shown in FIG. 5, a first camera A1, a second camera A2, a first millimeter wave radar B1, a first millimeter wave radar B2, and a lidar can implement synchronous sampling in time and space in a uniform timeline corresponding to the pre-provided clock signal source Fsync.

It should be noted that any two of the first millimeter wave radar B1, the first millimeter wave radar B2, and the lidar have different sampling frequencies from those of the first camera A1 and the second camera A2. Therefore, at a specific moment, the first camera A1, the second camera A2, the first millimeter wave radar B1, the first millimeter wave radar B2, and the lidar can achieve synchronous sampling. The first camera A1 and the second camera A2 have the same sampling frequency, and synchronous sampling can be implemented at each moment.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a multi-sensor synchronization control device.

Referring to FIG. 6, FIG. 6 is a block diagram of a main structure of a multi-sensor synchronization control device according to an embodiment of the invention. As shown in FIG. 6, the multi-sensor synchronization control device in this embodiment of the invention mainly includes a processor 60 and a storage apparatus 61.

The storage apparatus 61 may be configured to store a program for performing the multi-sensor synchronization control method in the above method embodiment. The processor 60 may be configured to execute a program in the storage apparatus 61, where the program includes, but is not limited to, the program for performing the multi-sensor synchronization control method in the above method embodiment. For ease of description, only parts related to the embodiments of the invention are shown. For specific technical details that are not disclosed, refer to the method part of the embodiments of the invention. The multi-sensor synchronization control device may be a control device including various electronic devices.

Further, the invention further provides an autonomous driving system. The autonomous driving system includes the multi-sensor synchronization control device of the above embodiment.

Further, the invention further provides a computer-readable storage medium. In an embodiment of the computer-readable storage medium according to the invention, the computer-readable storage medium may be configured to store a program for performing the multi-sensor synchronization control method in the above method embodiments. The program may be loaded and executed by a processor to implement the above multi-sensor synchronization control method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, it should be understood that, because the configuration of modules is merely intended to illustrate function units of the apparatus in the invention, physical devices corresponding to these modules may be a processor itself, or part of software, part of hardware, or part of a combination of software and hardware in the processor. Therefore, the quantity of modules in the figure is merely illustrative.

Those skilled in the art can understand that the modules in the apparatus may be adaptively split or combined. Such a split or combination of specific modules does not cause the technical solutions to depart from the principle of the invention. Therefore, technical solutions after any such split or combination shall all fall within the scope of protection of the invention.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A multi-sensor synchronization control method, comprising:
determining delay duration of sensors to be synchronized based on coordinates of a preset reference point corresponding to the sensors to be synchronized and control characteristics of the sensors to be synchronized, wherein the delay duration is duration between a triggering moment of the sensors to be synchronized and a preset target sampling moment of the sensors to be synchronized;
determining the triggering moment of the sensors to be synchronized based on the preset target sampling moment and the delay duration; and
triggering, by using the triggering moment, a synchronous clock signal corresponding to the sensors to be synchronized and obtained based on a pre-provided clock signal source, so that the sensors to be synchronized sample data on the preset reference point at the target sampling moment.

2. The multi-sensor synchronization control method according to claim 1, wherein the synchronous clock signal is obtained in the following way:
performing, based on the pre-provided clock signal source, frequency division on the clock signal source by using a frequency divider having the same sampling frequency as the sensors to be synchronized to obtain the synchronous clock signal; or
correcting a local clock of the sensors to be synchronized based on the pre-provided clock signal source according to a fixed frequency to obtain the synchronous clock signal.

3. The multi-sensor synchronization control method according to claim 1, wherein the determining delay duration of sensors to be synchronized based on coordinates of a preset reference point corresponding to the sensors to be synchronized and control characteristics of the sensors to be synchronized comprises:
determining first delay duration of the sensors to be synchronized based on the coordinates of the preset reference point;
determining second delay duration of the sensors to be synchronized based on the control characteristics of the sensors to be synchronized; and
taking a sum of the first delay duration and the second delay duration as the delay duration.

4. The multi-sensor synchronization control method according to claim 3, wherein the determining first delay duration of the sensors to be synchronized based on the coordinates of the preset reference point comprises:
determining the first delay duration corresponding to the coordinates of the preset reference point based on a preset association relationship between coordinates and delay duration; and
the determining second delay duration of the sensors to be synchronized based on the control characteristics of the sensors to be synchronized comprises:
determining the second delay duration based on response duration and/or a sampling frequency of the sensors to be synchronized.

5. The multi-sensor synchronization control method according to claim 1, wherein before the determining delay duration of the sensors to be synchronized based on coordinates of a preset reference point corresponding to the sensors to be synchronized and control characteristics of the sensors to be synchronized, the method further comprises:
in a coordinate system of an autonomous driving system provided with the sensors to be synchronized, selecting a common point of sampling ranges of a plurality of sensors in at least one specified direction as a preset reference point in each specified direction,
wherein the sampling range of the sensor is determined based on an installation angle and position of the sensor.

6. The multi-sensor synchronization control method according to claim **1,** wherein before the determining delay duration of the sensors to be synchronized based on coordinates of a preset reference point corresponding to the sensors to be synchronized and control characteristics of the sensors to be synchronized, the method further comprises:
in a coordinate system of the sensors to be synchronized, selecting a point at a specified position as the preset reference point.

7. The multi-sensor synchronization control method according to claim 6, wherein the method further comprises:
if the preset reference point is the selected point at the specified position in the coordinate system of the sensors to be synchronized, correcting, based on extrinsic parameters of the sensors to be synchronized, the data sampled by the sensors to be synchronized.

8. The multi-sensor synchronization control method according to claim 1, wherein a process of obtaining the clock signal source comprises:
generating a periodic waveform with a fixed frequency by using a high-precision temperature drift compensated crystal oscillator; and
using the periodic waveform as the clock signal source.

9. A multi-sensor synchronization control device, comprising at least one processor and a storage apparatus configured to store a plurality of program codes, wherein the program codes are adapted to be loaded and executed by the at least one processor to perform the multi-sensor synchronization control method according to any one of claims 1 to 8.

10. An autonomous driving system, comprising the multi-sensor synchronization control device according to claim 9.

11. A computer-readable storage medium storing a plurality of program codes, wherein the program codes are adapted to be loaded and executed by at least one processor to perform the multi-sensor synchronization control method according to any one of claims 1 to 8.
